# EUROPEAN PATENT SPECIFICATION

(11) **EP 2 127 770 B1**
(45) Date of publication and mention of the grant of the patent: **04.08.2010**
(21) Application number: 08425382.2
(22) Date of filing: 28.05.2008
(51) Int. Cl.: B21D 5/02

(54) **Apparatus for a precise and linear measurement of the bending force userful for determining the springback of a workpiece bent by a press brake**
Vorrichtung zur genauen und linearen Messung einer Biegekraft zur Bestimmung des Rückschlags eines durch eine Druckbremse gebogenen Werkstücks
Appareil pour une mesure précise et linéaire de la force de pliage utile pour déterminer le recul élastique d'une pièce pliée par une presse plieuse

(43) Date of publication of application: 02.12.2009
(73) Proprietor: Macchine Industriali S.P.A, 29027 Podenzano (Piacenza) (IT)
(72) Inventor: Mondani, Filippo, 29027 Podenzano (Piacenza) (IT)
(74) Representative: Guareschi, Antonella

(56) References cited:
- EP-B- 1 123 170
- WO-A-2006/063683
- JP-A- 3 090 216
- JP-A- 2006 136 926

## Description

This invention relates to an apparatus for determining the springback of a workpiece bent by a press brake. An apparatus of this kind is known for example from document WO-A- 2006/063683.

Press brakes are generally used to bend a metal plate or sheet at predetermined bend angles.

More simply, they are comprised of a punch, which can be moved toward a corresponding die, the latter having the shape to be imparted to the sheet to be bent.

The problem consists in the springback of the metal sheet, which opens apart upon bending, to form an angle that considerably differs from the minimum angle obtained at the end of the bending step, that cannot be exactly compensated for beforehand.

The methods that are typically used for correcting any bending errors require precise measurement of forces throughout the bending process.

The difference between the various methods consists in how the bending forces are measured and how measurements are used for calculating the penetration stroke of the pressing machine.

For example, in view of correcting errors caused by uneven thickness of the metal sheets the art described in patent US 6,581,427 discloses a method which determines the actual thickness of the sheet between the punch and the die, by measuring the pressure of the brake's punch-driving hydraulic cylinders, and adapts the system to the new correct value, thereby allowing it to operate with new displacement values.

The above patent also discloses the possibility of performing such control functions using devices for detecting the mechanical stress exerted by the cylinders on the punch (more precisely on the punch-supporting beam), or using devices for detecting the strain between the parts of the frame of the press brake.

In other words, the system disclosed in the above patent acquires physical parameter measurements very far from the actual working location, i.e. the sheet between the punch and the die, because the punch-driving cylinders are located away from such location and often hold a beam which in turn supports the punch.

Obviously, if the strain detection devices are located in the proximity of the cylinders or on the frame of the press brake, then the detected signal is not exactly the same as the one generated by the interaction between the sheet, the die and the punch, and contains various errors arising from outside the press brake, such as vibrations generated by other mechanical parts.

An additional drawback is that such interaction might be acquired with values being attenuated by propagation through the parts of the press brake.

Also, the detector devices placed on the structural part of the press brake provide a highly attenuated signal, thence having considerable errors, when the sheet workpieces to be bent have small sizes and/or thicknesses, relative to the maximum bending force that might be exerted by the press brake.

Nonetheless, when using force sensors directly mounted to the tools (die or punch), these are generally affected by spurious transverse stresses that are not proportional to the sheet bending effort. Due to these stresses, all the prior art techniques that can be used to compensate for the springback of the metal sheet when no full release of the sheet is allowed, become ineffective.

Examples of prior art springback correction techniques, based on the acknowledgement of the end of the bending step by force measurements are those disclosed in patents EP-A-993882, WO-A-03/072278 and DE-U-29713318.

Nevertheless, all the techniques of this type are based on the assumption that force measurement is precise and linear.

In patent JP-A-03090216 the problem of non linear measurement caused by spurious bending stresses is solved by a particular design of the die, which allows load cells to be mounted in central positions, i.e. along the neutral axis of any flexural deformation.

Nevertheless, this solution suffers from the drawback that the tool becomes weakened, and that it cannot be equipped with other sensors required for precise measurement, such as bend angle measuring instruments, known per se, that are manufactured using various technologies, using the spaces within the tools (punches or dies).

In all these patents the correction of the bend angle happens after the release of the workpiece and so errors can occur when the workpiece is taken again.

Therefore, the object of this invention is to exactly detect the deformations and/or strains generated directly on the die upon bending, to uniquely and precisely determine the correct sheet bending angle, by exact recognition of the start and/or the end of the bending operation.

The general problem of press brakes is that, upon bending, the sheet has a springback, which deviates the bend angle from the desired one.

By measuring the stress-strain curve, which progressively decreases at the end of springback after bending, the actual springback of the bent sheet may be determined, even prior to its being completely released from the press brake, by acquiring an intermediate measurement, in partial springback conditions, relating it to the corresponding position of the punch as detected by the controller of the press brake, and extrapolating the position of the punch in full springback conditions.

Therefore, in a subsequent bending step, the detected angle error may be corrected, and a correctly bent workpiece may be obtained.

Unfortunately, when the bending force is determined from the deformation of the die, linearity errors are generated that are quantitatively unacceptable, besides occurring randomly.

The inevitable deformations occurring at the start of the bending step are caused by the mainly flexural deformation of the tools that, due to inevitable dimensional or assembly errors, although little, shall adapt to and mate with each other thereby creating an effect that, as the case may be, can be added to or subtracted from the typical compressive deformation associated with the actual sheet bending action.

This initial deformation, that is maintained throughout the bending operation, affects the linearity of the relationship between the bending stress and the corresponding measurement, and makes any algorithm based on measurement linearity for determining the springback of the sheet totally ineffective.

The object of the present patent is to provide a particular arrangement of the cells over the outer surface of the dies, without changing their shape, thereby wholly compensating for any spurious deformation not caused by the sheet bending stress.

Thanks to this arrangement, as defined in the annexed claims, the springback problem is obviated, because the instruments which identify the deformations and/or strains of the die are also springback meters when considering the difference between the maximum penetration of the punch into the die at the end of a bending operation, and that obtained by direct measurement or extrapolation, at the end of springback, as the strain is wholly released and the die or the punch are consequently deformed.

If the device is combined with an external bend measuring device, not described in detail because it can be produced with various methods and in a well-known manner, a full measuring system is obtained, which can make bends at desired angles with a higher accuracy, even without prior knowledge of the thickness and size of the workpiece and the mechanical properties of its material.

The advantages achieved thanks to this invention may be summarized as a more accurate measurement of the sheet strain, as the available signal is independent of tool dimensioning and positioning errors, which are unpredictable and different after any installation or displacement of the tools.

The available signal is unaffected by the workpiece length, because even a small sheet piece is sufficient to produce an adequate strain in the portion of the relevant tool on which the deformation sensors are located.

Furthermore, even thin sheets may provide important deformation signals, because the tools for this kind of sheets are generally sized in view of the expected bending stresses thereon, and are subjected to the same deformations as the tools that are designed to bend thicker sheets.

The high signal quality provided by this invention allows to use extrapolation methods, which allow the sheet not to be necessarily fully released, which would prevent the formation of a second bend, to correct the former.

These objects and advantages are achieved by an apparatus for determining the springback of a workpiece bent by a press brake according to claims 1 and 2. The dependent claims define preferred embodiments of the apparatus according to the invention.

These and other features will be more apparent from the following description of a few embodiments, which are shown by way of example in the accompanying drawings, in which:

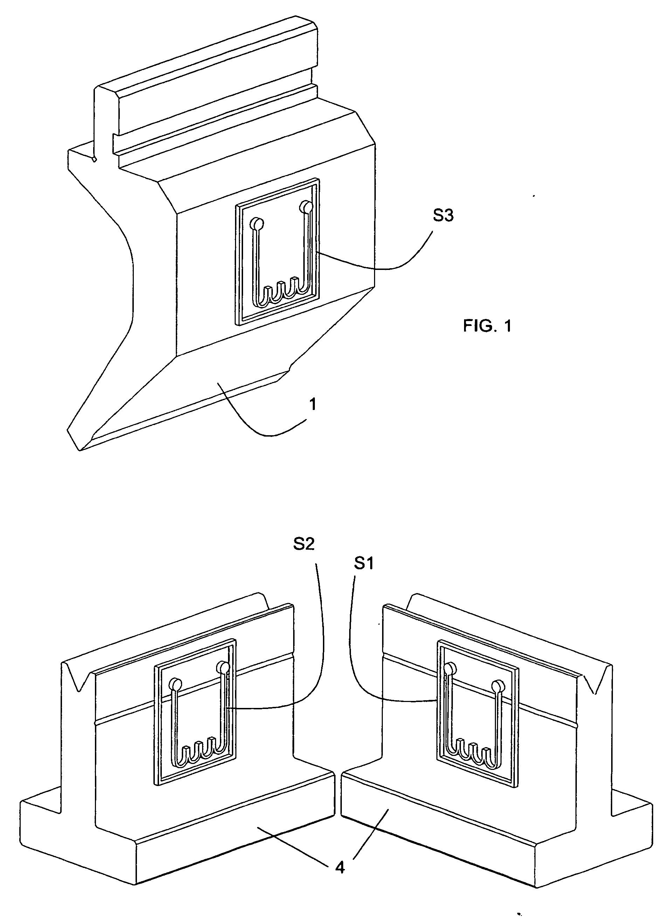

- Figure 1 shows a die of a press brake with a couple of associated deformation or strain measuring device;

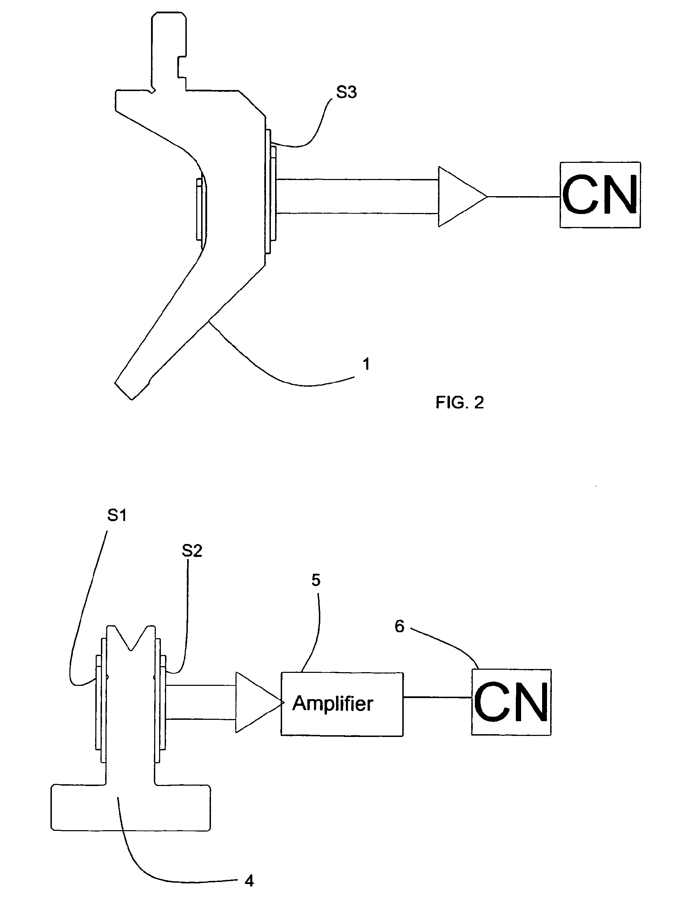

- Figure 2 is a side view of Figure 1. Referring to figures 1 and 2 a punch 1 and a die 4 are shown, which are used in a press brake to bend a metal sheet there between at predetermined bend angles.

A couple of devices S1, S2 is located on the die 4 to detect the deformation and/or strain generated thereon during bending, and translate it into an electric signal.

More specifically, this method includes the method of detecting the deformation or the strain of the die 4 during bending by considering the signals coming from both the strain measuring devices S1, S2 and translating them into electric signals; then, the electric signals may be adequately amplified and summed by means of a operational amplifier 5 to be further transmitted to a controller 6.

The bending force is measured by a pair of identical strain gauges or *strain measuring devices* S1, S2 that are mounted to the outer surface of the die 4 on either side of the bending line.

Instead of or in addition to the above, the bending force may be also measured by a pair of identical strain gauges or *strain measuring devices* S3 that are mounted to the outer surface of the punch, on either side of the bending line.

While reference will be made hereinafter to the solution with strain gauges S1, S2 on the die, this application will be susceptible of also covering those on the punch.

The two strain gauges S1, S2 shall be placed in symmetrical positions with respect to the neutral axis of any flexural deformation of the die.

In the simplest embodiment of the measuring apparatus of the invention, each strain gauge S1, S2 consists of a single resistive element, located in such position as to be mainly subjected to the compressive stresses exerted on the die.

The signals provided by the two sensors S1, S2 are summed by an operational amplifier 5 as is known per se.

The undesired effects caused by the initial deformations of the die 4 under stress are eliminated by being summed on the one hand to the signal provided by a sensor and by being subtracted on the other hand from the signal provided by the opposite sensor, wherefore they are removed in the total sum signal obtained from the two individual signals.

In a more complex embodiment of the apparatus, the first sensor S1 of the pair is a network of two resistive elements oriented orthogonal to each other such that they are only exposed to compressive stresses and connected in half-bridge configuration.

The second sensor S2 of the pair, which is identical to the first sensor, is mounted opposite to it.

The signal from one sensor and that from the other sensor are summed by connecting the two half-bridges to form a full resistive bridge, for an operational amplifier to amplify the difference between the two signals.

With this measuring apparatus, the error components associated with spurious deformations are compensated for and eliminated, whereas the significant signal components deriving from tool compression are doubled.

In the preferred arrangement of the measuring apparatus, the two sensors S1, S2 are both mounted at the center of a die segment, before and behind the bending line of the bending machine respectively.

The measuring apparatus may further include a pair of sensors, each composed of bridge of strain gauges, with its amplifier and a summer for the amplified signals.

In the preferred embodiment, the sensors are resistive strain gauges, but strain measuring devices of other types as available in the art may be also used, as long as they have the same function, such as sensors of piezoelectric, capacitive type, etc.

In a typical embodiement based on the data collected at the start of the bending operation, the controller 6 corrects the thickness in the calculation of the penetration required to obtain the desired bend in the workpiece.

Based on the data collected in the releasing step, and using prior art methods, as set forth by way of example and as a complement to the description, the controller 6 also extrapolates and calculates the error in full springback conditions, without the workpiece being actually released, and corrects the bend on the same workpiece, thereby avoiding any error due to correcting the bend on a released workpiece.

In a variant embodiment, not shown, an additional device is combined with the press brake as described above, for detecting the bend angle so that the apparatus becomes useful both for determining the angle obtained during bending and the sheet springback, and further improving the processing accuracy.

## Claims

1. An apparatus for determining the springback of a workpiece bent by a press brake, said workpiece being placed between the die (4) and the punch (1) of the press brake, comprising the means for:
a. detecting the deformation or strain in at least two different and simmetrical positions in the die (4) and translating it into an electric signal; said detection occurring at the start of the process, during bending and release of the punch (1);
b. amplifying and summing the deformation or strain signals coming from each couple of simmetrical position by means of at least one amplifier (5) to eliminate the differences caused by spurious deformations occurring at the start of the bending step, and summing the actual measures of the bending force deriving from the compression components only;
c. transmitting the result of the sum to a controller (6) of the press brake, which processes the collected data and corrects the angle of the workpiece being bent.

2. An apparatus for determining the springback of a workpiece bent by a press brake, said workpiece being placed between the die (4) and the punch (1) of the press brake, comprising the means for:
a. detecting the deformation or strain in at least two different and simmetrical positions in the punch (1) and translating it into an electric signal; said detection occurring at the start of the process, during bending and release of the punch (1);
b.amplifying and summing the deformation or strain signals coming from each couple of simmetrical position by means of at least one amplifier (5) to eliminate the differences caused by spurious deformations occurring at the start of the bending step, and summing the actual measures of the bending force deriving from the compression components only;
c. transmitting the result of the sum to a controller (6) of the press brake, which processes the collected data and corrects the angle of the workpiece being bent.

3. Apparatus as claimed in claim 1 or 2, **characterized in that** the deformation and stress are detected by mounting a pair of strain gauges (S1, S2, S3) outside the die, in central and symmetrical front and rear positions.

4. Apparatus as claimed in any one of the preceding claims, **characterized in that** the sensors (S1, S2, S3) that are used for deformation and stress detection consist of a network of at least two resistive elements oriented orthogonal to each other and connected in opposite positions, to form the sides of a full resistive bridge, designed to provide the useful signal given by the sum of the axial deformations only, and compensate for the equal and opposite error components derived from uncontrolled flexural deformations.

5. Apparatus as claimed in any one of the preceding claims, **characterized in that** the sensors (S1, S2, S3) that are used for deformation and stress detection consist of a single resistive element, located in such position as to be mainly subjected to the compressive stresses exerted on the die and the signals provided by the two sensors are summed by an operational amplifier, so that the undesired effects caused by the initial deformations of the die under stress are eliminated by being summed on the one hand to the signal provided by a sensor and by being subtracted on the other hand from the signal provided by the opposite sensor, wherefore they are eliminated in the total sum signal obtained from the two individual signals.

## Patentansprüche

1. Apparat zur Bestimmung der Rückfederung eines mit einer Biegepresse gebogenen Werkstückes, wobei das Werkstück zwischen der Matrize (4) und dem Stempel (1) der Biegepresse angeordnet wird, umfassend Mittel zur:
a. Erfassung der Verformung oder Dehnbeanspruchung an mindestens zwei verschiedenen und symmetrischen Stellen in der Matrize (4) und Umwandlung in ein elektrisches Signal; wobei diese Erfassung bei Verfahrensbeginn, während des Biegevorgangs und der Freigabe des Stempels (1) erfolgt;
b. Verstärkung und Summierung der von den einzelnen symmetrischen Positionspaaren kommenden Verformungs-oder Dehnbeanspruchungssignale durch mindestens einen Verstärker (5) zur Beseitigung von durch unechte Verformungen verursachten Unterschieden, welche bei Beginn des Biegevorgangs vorkommen, und Summierung der effektiven Messungen der ausschliesslich von den Presskomponenten kommenden Biegekraft;
c. Übermittlung des Summenergebnisses an eine Steuereinheit (6) der Biegepresse, welche die erfassten Daten verarbeitet und den Winkel des dem Biegevorgang ausgesetzten Werkstückes korrigiert.

2. Vorrichtung zur Bestimmung der Rückfederung eines mit einer Biegepresse gebogenen Werkstückes, wobei das Werkstück zwischen der Matrize (4) und dem Stempel (1) der Biegepresse angeordnet wird, umfassend Mittel zur:
a. Erfassung der Verformung oder Dehnbeanspruchung an mindestens zwei verschiedenen und symmetrischen Stellen in dem Stempel (1) und Umwandlung in ein elektrisches Signal; wobei diese Erfassung bei Verfahrensbeginn, während des Biegevorgangs und der Freigabe des Stempels (1) erfolgt;
b. Verstärkung und Summierung der von den einzelnen symmetrischen Positionspaaren kommenden Verformungs-oder Dehnbeanspruchungssignale durch mindestens einen Verstärker (5) zur Beseitigung von durch unechte Verformungen verursachten Unterschieden, welche bei Beginn des Biegevorgangs vorkommen, und Summierung der effektiven Messungen der ausschliesslich von den Presskomponenten kommenden Biegekraft;
c. Übermittlung des Summenergebnisses an eine Steuereinheit (6) der Biegepresse, welche die erfassten Daten verarbeitet und den Winkel des dem Biegevorgang ausgesetzten Werkstückes korrigiert.

3. Apparat nach Anspruch 1 oder 2, **dadurch gekennzeichnet, dass** die Verformung und Dehnbeanspruchung durch Anbringen eines Manometerpaares (S1, S2, S3) ausserhalb der Matrize an mittigen und symmetrischen Stellen auf der Vorder-und Rückseite erfolgt.

4. Apparat nach einem der vorhergehenden Ansprüche, **dadurch gekennzeichnet, dass** die zur Erfassung der Verformung und Dehnbeanspruchung zum Einsatz kommenden Sensoren (S1, S2, S3) aus einer Gruppe von mindestens zwei Widerstandselementen bestehen, die senkrecht zueinander ausgerichtet und in entgegengesetzen Positionen verbunden sind, um die Seiten einer vollständigen Widerstandsbrücke auszubilden, welche das Nutzsignal zur Verfügung stellt, das durch die Summe lediglich der achsialen Verformungen erzeugt wird, und Kompensation der durch unkontrollierte Biegeverformungen verursachten gleichen und entgegengesetzten Fehlerkomponenten.

5. Apparat nach einem der vorhergehenden Ansprüche, **dadurch gekennzeichnet, dass** die zur Erfassung der Verformung und Dehnbeanspruchung zum Einsatz kommenden Sensoren (S1, S2, S3) aus einem einzigen Widerstandselement bestehen, das in einer derartigen Position angeordnet ist, dass es hauptsächlich den auf die Matrize ausgeübten Druckbeanspruchungen ausgesetzt ist, wobei die von den beiden Sensoren erzeugten Signale durch einen Funktionsverstärker summiert werden, so dass die unerwünschten Einwirkungen beseitigt werden, welche durch die anfänglichen Verformungen der belasteten Matrize verursacht werden, und zwar einerseits durch Summierung zu dem durch einen Sensor erzeugtes Signal und andererseits durch Subtraktion von dem durch den entgegengesetzten Sensor erzeugtes Signal, wodurch sie aus dem Endsummensignal beseitigt werden, das aus den beiden Einzelsignalen erhalten wird.

## Revendications

1. Appareil pour déterminer le retour élastique d'une pièce pliée par un frein d'une presse, la dite pièce étant placée entre le moule (4) et le poinçon (1) du frein de la presse, comprenant les moyens pour :
a. relever la déformation ou la tension dans au moins deux positions différentes et symétriques dans le moule (4) et les convertir dans un signal électrique ; le dit relevé se vérifiant au commencement du procédé, pendant le pliage et le relèvement du poinçon (1) ;
b. amplifier et sommer les signaux de déformation ou de tension dérivant de chaque paire de positions symétriques par au moins un amplificateur (5) en manière d'éliminer les différences causées par des fausses déformations se vérifiant au commencement de l'opération de pliage, et sommant les mesures effectives de la force de pliage dérivant seulement des composants de compression ;
c. transmettre le résultat de la somme à un contrôleur (6) du frein de la presse, qui élabore les données recueillies et corrige l'angle de la pièce étant pliée.

2. Appareil pour déterminer le retour élastique d'une pièce pliée par un frein d'une presse, la dite pièce étant placée entre le moule (4) et le poinçon (1) du frein de la presse, comprenant les moyens pour :
a. relever la déformation ou la tension dans au moins deux positions différentes et symétriques dans la moule (4) et les convertir dans un signal électrique; le dit relevé se vérifiant au commencement du procédé, pendant le pliage et le relèvement du poinçon (1) ;
b. amplifier et sommer les signaux de déformation ou de tension dérivant de chaque paire de positions symétriques par au moins un amplificateur (5) en manière d'éliminer les différences causées par des fausses déformations se vérifiant au commencement de l'opération de pliage, et sommant les mesures effectives de la force de pliage dérivant seulement des composants de compression ;
c. transmettre le résultat de la somme à un contrôleur (6) du frein de la presse, qui élabore les données recueillies et corrige l'angle de la pièce étant pliée.

3. Appareil selon la revendication 1 ou 2, **caractérisé en ce que** la déformation et la tension sont relevées en montant une paire d'extensomètres (S1, S2, S3) à l'extérieur du poinçon, dans des positions avant et arrière centrales et symétriques.

4. Appareil selon une quelconque des revendications précédentes, **caractérisé en ce que** les senseurs (S1, S2, S3) qui sont utilisés pour un relèvement de la déformation et de la tension sont formés par un réseau d'au moins deux éléments résistifs orientés orthogonaux un à l'autre et connectés dans des directions opposites, en manière de former les côtés d'un pont complètement résistif, prévu pour fournir le signal utile donné par la somme des seules déformations axiales, et pour compenser les composants d'erreur égales et opposites dérivées de déformations de flexion non contrôlées.

5. Appareil selon une quelconque des revendications précédentes, **caractérisé en ce que** les senseurs (S1, S2, S3) qui sont utilisés pour un relèvement de la déformation et de la tension sont formés par un seul élément résistif, situé dans une position pour être principalement soumis au tensions de compression appliquées sur le poinçon, et les signaux fournis par les deux senseurs sont sommés par un amplificateur opératif, en manière d'éliminer ainsi les déformations initiales du poinçon sollicité par la tension, en étant sommés d'une part au signal fourni par un senseur et étant soustraits d'autre part du signal fourni par le senseur opposite, et par conséquent ils sont éliminés dans le signal de la somme totale obtenu par les deux signaux individuels.
